# EUROPEAN PATENT APPLICATION

(11) **EP 4 435 422 A1**
(43) Date of publication of application: **25.09.2024**
(21) Application number: 23163304.1
(22) Date of filing: 21.03.2023
(51) Int. Cl.: G01N 23/223

(54) **XRF ANALYSIS METHOD AND PORTABLE XRF ANALYSIS DEVICE FOR SAMPLES OF METALLIC ALLOY**

(71) Applicant: Fondis Electronic, 78960 Voisins-le-Bretonneux (FR)
(72) Inventor: SMOLEK, Stephan, 78960 Voisins-le-Bretonneux (FR); FELLINGER, Marc, 78960 Voisins-le-Bretonneux (FR); MADERITSCH, Angelika, 78960 Voisins-le-Bretonneux (FR); RUPPERT, Michael, 78960 Voisins-le-Bretonneux (FR)
(74) Representative: Demulsant, Xavier

(57) **Abstract**

An XRF analysis method of a sample of metallic alloy comprising:
- determining the matrix of the sample, using a first predetermined low voltage to direct X-rays at the sample during a predetermined first time;
- if the matrix of the sample is not Al or Si or Mg base, quantifying at least one alloy element and the iron content of the sample, using a predetermined high voltage to direct X-rays at the sample during a predetermined second time;
- if the matrix of the sample is Al or Si or Mg base, quantifying at least one alloy element and the aluminum content of the sample, using a second predetermined low voltage, to direct X-rays at the sample during a predetermined third time;
the first predetermined low voltage being at 5-20 kV.

## Description

### FIELD OF THE INVENTION

The invention relate generally to X-ray fluorescence (XRF) spectrometry, and more specifically to determining measurement conditions to be applied by an XRF spectrometer. The invention generally relates more particularly to field portable X-ray fluorescence spectrometer.

### BACKGROUND OF THE INVENTION

XRF is the emission of secondary fluorescent X-rays from a material that has been excited by, for example, high-energy X-rays, gamma rays, an electron beam, or a radioactive source directed at the material.

Portable X-ray fluorescence has been used from mineral prospecting, mining, refining, raw-material confirmation, in-process inspection and scrap metal sorting. One specific use of portable XRF is chemical analysis of a solid sample, in particular alloy grade identification for positive material identification (PMI).

An alloy grade is an identifier (e.g., a combination of numbers and/or letters) assigned to a material having a predefined combination of elements and concentration of those elements. For example, the American Society for Testing and Materials (ASTM) develops and publishes technical standards for alloys, examples of alloy grades including alloy 303, alloy 304, and alloy 321, which are known types of stainless steel. The technical standards include the elements, and the concentration of those elements, that must be present in a material to be referred to as, for example, alloy 303. The technical standards can be used to differentiate between, for example, alloy 303 and alloy 321. An alloy grade may also be referenced by a Unified Numbering System for Metals and Alloys (UNS) number.

Positive material identification is a fast and non-destructive testing method for verifying the chemical composition of materials. As regards metal parts, PMI is utilized for quality control and safety compliance in many industries including gas, nuclear, or chemical. PMI is used to test in-service process equipment or piping systems.

In an XRF spectrometer, the X-ray fluorescence radiation emitted by the sample is detected, the energy distribution of the emitted radiation being characteristic of the elements present in the sample, while the intensity distribution gives information about the relative abundance of the sample components.

Measurement conditions are typically determined by an operator of the XRF spectrometer. These measurement conditions may include a length of time the measurement is taken, the level of voltage applied to an X-ray generator included within the XRF spectrometer, the filter used, and/or other measurement conditions that may affect the measurement.

The recommended measurement conditions depend on the composition of the sample, which may not be known before the element analysis is performed.

Furthermore, recommended measurement conditions may depend on the concentration of the elements included in the sample, which also may not be known before the element analysis is performed.

Therefore, the operator of the XRF spectrometer may not know prior to performing the element analysis what measurement conditions will facilitate an efficient element analysis (i.e., an accurate determination of the elemental composition in a minimum amount of time) and determination of the alloy grade.

Some prior art devices allow the selection of profiles that are preconfigured for a specific task (e.g. for measuring special iron or aluminum materials). However, it is necessary for the user to only measure materials for which this selected profile has been set up in advance. Other material samples may not give the desired results.

The pre-designation of an alloy, by the user of a portable XRF analyzer is a challenging task. As an example, scrap pieces of different aluminum alloy compositions are not ordinarily visually distinguishable from each other.

Conventional XRF analyzers generally require a X-ray tube capable of being driven at a low voltage (e.g., 10 kV), a high current, with little or no primary beam filtering in order to allow a large number of low-energy X-ray to strike the sample. This setting of tube voltage, current and filter selection is optimal to detect some elements, such as aluminum, silicon, magnesium, phosphorus and/or sulfur. The tube is also driven at a higher voltage levels (e.g., 40-50 kV), with lower current and a thicker primary beam filter to detect other elements, in particular the transition metals (titanium, chromium, iron, nickel and copper), the heavy metals such as lead and gold, and transition metals that require high X-ray tube voltages including cadmium, silver, tin, and/or antimony.

The current measurement strategy employed by known portable XRF devices is to first test the material with a high voltage, low current beam for several seconds. If it is determined via the scattered X-rays that the alloy is an aluminum or magnesium alloy, then the device switches to the low voltage, high current beam setting, since accurate analysis of aluminum alloys requires the concentrations of Mg, Si and Al to be determined.

Thus, for the state of the art of hand held XRF instruments, excitation conditions to use, their order and their usage time have to be predefined before a measurement. If one XRF instrument is to be used for several different measurements tasks, with the respectively best excitation conditions for a task, the operator has either to change settings before each measurement or to accept default settings.

For the state of the art of hand held XRF instruments, different settings for several measurement tasks may be saved as profiles. However, the excitation conditions have still to be predefined and selected beforehand.

For the state of the art of hand held XRF instruments, the end of a measurement has to be predefined, or the operator has to decide when he should stop the measurement.

In view of the above, an operator has to be either very well trained or need a deep knowledge of XRF as well as of the materials in order to carry out the analysis as expeditiously as possible. Otherwise, the operator has to use the default settings of the instrument, which are not always the best conditions for the concentration of the elements included in the sample to be tested.

### SUMMARY OF THE INVENTION

It is a general object of the present disclosure to overcome the problems associated with the background art.

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

While the invention is susceptible to various modification and alternative forms, specific embodiments thereof have been shown by way of example. It should be understood, however, that the description herein of specific embodiments is not intended to limit the invention to the particular forms disclosed.

The foregoing and other objects of the present invention may be realized with an XRF analysis method of a sample of metallic alloy comprising:
- determining the matrix of the sample, using a first predetermined low voltage to direct X-rays at the sample during a predetermined first time;
- if the matrix of the sample is not aluminum or magnesium base, (and is for example iron base), quantifying at least one alloy element and the remainder (for example the iron content of the sample if the sample is iron base), using a predetermined high voltage to direct X-rays at the sample during a predetermined second time;
- if the matrix of the sample is aluminum or magnesium base, quantifying at least one alloy element and the aluminum of magnesium content of the sample, using a second predetermined low voltage, to direct X-rays at the sample during a predetermined third time.

For example, the base of the matrix can be iron, nickel, copper, cobalt, zinc, titanium, tin, gold, silver, platinum, tungsten, lead, aluminum, magnesium.

The first predetermined low voltage is advantageously at 5-20 kV, the predetermined first time being advantageously less than one second.

The dynamic measurement process is thus influenced by the automatic matrix determination, excitation conditions for the second automatic step of the analysis being determined according to the matrix determination. Advantageously, the excitation conditions includes at least one of the following parameters: excitation time, voltage level, current level.

In certain embodiments, the predetermined first time is less than one second, the first predetermined low voltage being of 12 kV.

In some embodiments, the predetermined high voltage is at 30-50 kV, and advantageously of 40 kV.

In some embodiments, the predetermined second time is less than 5 seconds, the quantified alloy elements including e.g. Cr, Ni, Mn Mo, Cu, Ti.

In some particular embodiments, the analysis method includes quantifying of at least one minor alloy element or impurity, using a third predetermined low voltage, to direct X-rays using a predetermined fourth time.

In some specific embodiments, the third predetermined low voltage is at 5-20 kV, advantageously of 12kV, the predetermined fourth time being less than 10 seconds.

The impurity is e.g. sulfur S or Si.

In some embodiments, the second predetermined low voltage is at 5-20 kV, and advantageously of 12kV, the predetermined third time being less than 10 seconds, the alloy element including e.g. Mg, Si, Fe, Cu, Zn, Mn.

Advantageously, the analysis method comprise automatic measurement stop after a predetermined measurement time. The end of the measurement is set dynamically by software.

By software is meant computer executable instructions for manipulating data, the instructions being e.g. stored in a computer readable media. The computer executable instructions include data structures, objects, programs, routines, or other program modules that may be accessed by a processing system. Computer executable instructions cause the processing system to perform a particular function or group of functions and are examples of program code means for implementing steps for methods disclosed herein. Examples of computer readable media include random-access memory ("RAM"), read-only memory ("ROM"), programmable read-only memory ("PROM"), erasable programmable read-only memory ("EPROM"), electrically erasable programmable read-only memory ("EEPROM"), or any other device or component that is capable of providing data or executable instructions that may be accessed by a processing system.

The present invention also relates to a portable hand held XRF analyzer for the analysis of a sample of metallic alloy, the analyzer comprising:
- an X-ray source for directing X-rays to the sample;
- a detector for detecting photons emitted by the sample;
- means for controlling the X-ray source, the controlling means being configured to:
- determine the matrix of the sample, using a first predetermined low voltage to direct X-rays at the sample during a predetermined first time;
- if the matrix of the sample is not aluminum or magnesium base (and is for example iron base), quantify at least one alloy element and the remainder of the sample (for example the iron content of the sample of the matrix is iron base), using a predetermined high voltage to direct X-rays at the sample during a predetermined second time;
- if the matrix of the sample is aluminum or magnesium base, quantify at least one alloy element and the aluminum or magnesium content of the sample, using a second predetermined low voltage, to direct X-rays at the sample during a predetermined third time.

The first predetermined low voltage is advantageously at 5-20 kV. The predetermined first time is advantageously less than one second.

### DESCRIPTION OF THE INVENTION

An XRF analysis method of a sample of metallic alloy is presented, the method comprising:
- determining the matrix of the sample, using a first predetermined low voltage to direct X-rays at the sample during a predetermined first time;
- if the matrix of the sample is not aluminum or magnesium iron base (and is for example iron base), quantifying at least one alloy element and the remainder of the sample (for example the iron content of the sample if the matrix is iron base), using a predetermined high voltage to direct X-rays at the sample during a predetermined second time;
- if the matrix of the sample is aluminum or magnesium base, quantifying at least one alloy element and the aluminum or magnesium content of the sample, using a second predetermined low voltage, to direct X-rays at the sample during a predetermined third time.

The first predetermined low voltage is advantageously at 5-20 kV. The predetermined first time is advantageously less than one second.

Examples are presented below of conventional known method, compared to the method of the present invention.

As hypothesis, alloy grades are stored in a memory of XRF instruments, the alloy grades comprising e.g. 303, 304, 316, steels and aluminum alloys e.g. AI-5754, Al 6063. The XRF device is for example used by a metal processing company, purchasing and processing rods of steels (303, 304, 316) and aluminum alloys (AI-5754, AI-6063). Identification of the materials are made on sawn bar ends, without any preparation of the sample.

AISI 304 steel is a metastable austenitic iron-chromium-nickel steel X5CrNi18-10 having e.g. a composition as follows:

| Element | C | Si | Mn | P | S | Cr | Mo | Ni | Fe |
|---|---|---|---|---|---|---|---|---|---|
| Wt. % | 0.035 | 0.038 | 2.0 | 0.011 | 0.017 | 18.39 | 0.238 | 8.16 | Bal. |

AISI 303 steel is an austenitic iron-chromium-nickel stainless steel X10 CrNiS 18 9 steel having e.g. a composition as follows:

| Element | C | Si | Mn | P | S | Cr | Mo | Ni | Fe |
|---|---|---|---|---|---|---|---|---|---|
| Wt. % | 0.12 | 1.0 | 2.0 | 0.060 | 0.25 | 18.0 | 0 | 9.0 | Bal. |

AISI 316 steel is an austenitic steel X5 CrNiMo 17-12-2 having e.g. a composition as follows:

| Element | C | Si | Mn | Ti | Si | Cr | Mo | Ni | Fe |
|---|---|---|---|---|---|---|---|---|---|
| Wt. % | 0.08 | 0.6 | 1.8 | 0.8 | 0.6 | 17.0 | 2.0 | 13.0 | Bal. |

Added sulfur decreases corrosion resistance of grade 303 when compared to grade 304. Machinability of grade 303 is higher than the one of grade 304, thanks to the inclusion of sulfur.

A first comparative example illustrates some advantages of the present method.

The operator has to identify, e.g. for positive material identification (PMI), the presence of a 303 steel, using a hand held portable XRF instrument.

A novice operator does not know how to identify (visually, or by conventional empirical methods) such steel grade. Thus, a novice operator does not know what settings to make for the XRF instrument, and in particular has no idea of the voltage, current and the measurement time to use. The novice operator would thus use the default settings, theses default settings being, by nature, not adapted to each specific sample to be tested.

An operator using a conventional method and XRF device would use the following known measurement process:
*First step of the analysis*
   Voltage: 40 kV
   Measurement time: 5s
   Quantification of the elements: Fe, Cr, Ni, Mo, Ti.
   Grade-Matching shows 303 and 304 as possible results: S-quantification needed
*Second step of the analysis*
   Voltage 12 kV
   Measurement time: 10s
   Quantification of S
   Displayed result: 303 steel.
   Measurement total time: 15s.

According to the present disclosure, by contrast, the method is as follows:
*Determination of the matrix*
   Voltage: 12 kV
   Measurement time : <1s
   Matrix determination: Fe base
*Iron content and alloy element content quantification*
   Voltage: 40 kV
   Measurement time: <5s
   Quantification of the elements: Fe, Cr, Ni, Mo, Ti.
   Grade-Matching shows 303 and 304 as possible results
   S-quantification needed
*Quantification of sulfur*
   Voltage: 12 kV
   Measurement time : <10s
   Quantification of S.
   Displayed result: 303 steel.

Measurement stops after 15s.

The overall measurement time is the same, between the comparative known method and the present disclosure. The dynamic measurement process comprise three steps, whereas the comparative known method has only two steps, and appears to be simpler.

However, the operator using the known conventional method has to choose the excitation conditions and filters, this being challenging when the operator of the XRF spectrometer has no idea of the nature of the material to be tested or does not know what measurement conditions will facilitate an efficient element analysis (i.e., an accurate determination of the elemental composition in a minimum amount of time) and determination of the alloy grade.

Thus, mistakes are likely made by the operator, using conventional methods.

By contrast, using a method according to the present invention, the matrix of the sample to be tested is automatically determined, during a first step.

In the first example presented above, the iron matrix of the sample is determined.

Then, the conditions (voltage, time, current) for the second and third step of the analysis are determined automatically by the XRF device, using the present method, these conditions being adapted to the sample to be tested.

A second example illustrates other advantages of the present method.

In this second example, the operator has to identify, e.g. for positive material identification (PMI), the presence of a 316 steel, using a hand held portable XRF instrument.

Again, a novice operator does not know how to identify (visually, or by conventional empirical methods) such steel grade. Thus, a novice operator does not know what settings to make for the XRF instrument, and in particular has no idea of the voltage, current and the measurement time to use. The novice operator would thus use the default settings, theses default settings being, by nature, not adapted to each specific sample to be tested.

An operator using a conventional method and XRF device would use the following known measurement process:
*First step of the analysis*
   Voltage: 40 kV
   Measurement time: 5s
   Quantification of the elements: Fe, Cr, Ni, Mo, Ti.
   Grade-Matching shows 316 as possible results
*Second step of the analysis*
   Voltage 12 kV
   Measurement time: 10s
   Quantification of Si, S
   Displayed result: 316 steel.
   Measurement total time: 15s.

According to the present disclosure, by contrast, the method is as follows:
*Determination of the matrix*
   Voltage: 12 kV
   Measurement time : <1s
   Matrix determination: Fe base
*Iron content and alloy element content quantification*
   Voltage: 40 kV
   Measurement time: <5s
   Quantification of the elements: Fe, Cr, Ni, Mo, Ti.
   Grade-Matching shows 316 as result

Measurement stops after 6s.

The measurement time is shorter, using the present method, that using the conventional known method.

A third example illustrates other advantages of the present method.

In this third example, the operator has to identify, e.g. for positive material identification (PMI), the presence of AI-5754, e.g. in aluminum rods, using a hand held portable XRF instrument.

Again, a novice operator does not know how to identify (visually, or by conventional empirical methods) such aluminum grade. Thus, a novice operator does not know what settings to make for the XRF instrument, and in particular has no idea of the voltage, current and the measurement time to use. The novice operator would thus use the default settings, theses default settings being, by nature, not adapted to each specific sample to be tested.

An operator using a conventional method and XRF device would use the following known measurement process:
*First step of the analysis*
   Voltage: 40 kV
   Measurement time: 5s
   Quantification of the elements: Fe, Cu, Zn, Mn.
   Grade-Matching shows AI-6063 as possible result
   Mg quantification required (has to be known by the operator)
   If the operator stops the measurement, the result is erroneous.
*Second step of the analysis*
   Voltage 12 kV
   Measurement time: 10s
   Quantification of Mg, Al, Si
   Displayed result: AI-5754
   Measurement total time: 15s.

According to the present disclosure, by contrast, the method is as follows:
*Determination of the matrix*
   Voltage: 12 kV
   Measurement time : <1s
   Matrix determination: Al base
*Aluminum content and alloy element content quantification*
   Voltage: 12 kV
   Measurement time: <10s
   Quantification of the elements: Mg, Al, Si, Fe, Cu, Zn, Mn.
   Grade-Matching shows AI-5754 as result

Measurement stops after 10s.

Again, the result is correct and the measurement time is shorter, using the present method, that using the conventional known method.

The present invention disclose a dynamic measurement method for hand held XRF instruments. Excitation conditions (e.g. voltage, measurement time, current), and their order (alloy element quantifying and in some embodiments minor alloy element or impurities quantifying), are automatically set by the portable XRF instrument. The end of the measurement is also advantageously set by the software.

Thus, to use the instrument for several different measurement tasks (e.g. PMI of aluminum alloys, PMI of steel grades), with the best excitation conditions (voltage, measurement time, current), an operator has nothing to do beforehand.

When using the XRF portable instrument, the operator does not need to have a deep knowledge of XRF and does not need to have a knowledge of the materials to be tested.

A measurement profile manager advantageously creates measurement profiles for the intended use of the XRF portable device, e.g., the PMI identification of aluminum alloys and steel grades.

## Claims

1. An XRF analysis method of a sample of metallic alloy comprising:
- determining the matrix of the sample, using a first predetermined low voltage to direct X-rays at the sample during a predetermined first time;
- if the matrix of the sample is not aluminum or magnesium base, quantifying at least one alloy element and the remainder of the sample, using a predetermined high voltage to direct X-rays at the sample during a predetermined second time;
- if the matrix of the sample is aluminum or magnesium base, quantifying at least one alloy element and the aluminum or magnesium content of the sample, using a second predetermined low voltage, to direct X-rays at the sample during a predetermined third time.

2. An XRF analysis method according to claim 1, wherein the predetermined first time is less than one second, the first predetermined low voltage being at 5-20 kV.

3. An XRF analysis method according to claim 1 or 2, wherein the predetermined high voltage is at 30-50 kV, and advantageously of 40 kV.

4. An XRF analysis method according to claim 3, wherein the predetermined second time is less than 5 seconds, the quantified alloy elements including Cr, Ni, Mn, Mo, Cu, Ti.

5. An XRF analysis method according to claim 3 or 4, comprising quantifying of at least one minor alloy element or impurity, using a third predetermined low voltage, to direct X-rays using a predetermined fourth time.

6. An XRF analysis method according to claim 5, wherein the third predetermined low voltage is at 5-20 kV, advantageously of 12kV, the predetermined fourth time being less than 10 seconds.

7. An XRF analysis method according to claim 6, wherein the impurity being S or Si.

8. An XRF analysis method according to claims 1 or 2, wherein the second predetermined low voltage is at 5-20 kV, and advantageously of 12kV, the predetermined third time being less than 10 seconds, the alloy element including Mg, Si, Fe, Cu, Zn, Mn.

9. An XRF analysis method according to any one of claims 1 to 8, comprising measurement stop after a predetermined measurement time.

10. A portable hand held XRF analyzer for the analysis of a sample of metallic alloy, the analyzer comprising:
- an X-ray source for directing X-rays to the sample;
- a detector for detecting photons emitted by the sample;
- means for controlling the X-ray source, the controlling means being configured to:
- determine the matrix of the sample, using a first predetermined low voltage to direct X-rays at the sample during a predetermined first time;
- if the matrix of the sample is not aluminum or magnesium base, quantify at least one alloy element and the remainder of the sample, using a predetermined high voltage to direct X-rays at the sample during a predetermined second time;
- if the matrix of the sample is aluminum of magnesium base, quantify at least one alloy element and the aluminum or magnesium content of the sample, using a second predetermined low voltage, to direct X-rays at the sample during a predetermined third time.
